# EUROPÄISCHE PATENTANMELDUNG

(11) **EP 1 857 218 A1**
(43) Veröffentlichungstag der Anmeldung: **21.11.2007**
(21) Anmeldenummer: 06010253.0
(22) Anmeldetag: 18.05.2006
(51) Int. Cl.: B23P 6/04, B23K 33/00

(54) **Verfahren zur Reparatur eines Bauteils und ein Bauteil**

(71) Anmelder: SIEMENS AKTIENGESELLSCHAFT, 80333 München (DE)
(72) Erfinder: Ahmad, Fathi, 41564 Kaarst (DE); Dankert, Michael, 63069 Offenbach (DE)

(57) **Zusammenfassung**

Bei den Rissreparaturen nach dem Stand der Technik werden zwar die Risse ausgearbeitet und mit Lot bzw. einem Coupon gefüllt, jedoch weist ein solch repariertes Bauteil bei den späteren Einsatzbedingungen oft nicht die gewünschten mechanischen Hochtemperatureigenschaften auf.

Erfindungsgemäß sind in der Mulde (11) um den Riss (7) Stäbe (22', 22'', 22''') vorhanden, die ein späteres eventuelles Risswachstum stoppen.

## Beschreibung

Die Erfindung betrifft ein Verfahren zur Reparatur eines Bauteils gemäß dem Obergriff des Anspruchs 1 und ein Bauteil gemäß Anspruch 13.

Neu hergestellte, wie z.B. gegossene Bauteile oder Bauteile nach dem Einsatz weisen oft Risse auf, die repariert werden, damit das Bauteil wieder eingesetzt werden kann.

Nach dem Stand der Technik wird Material um den Riss ausgearbeitet und mit einem Lot gefüllt oder zugeschweißt.

Ebenso bekannt ist aus der EP 0 868 253 B1 das so genannte Coupon-Löten.

Oben genannte Verfahren können jedoch das Risswachstum beim Widereinsatz des Bauteils oft nicht ausreichend verhindern.

Es ist daher Aufgabe der Erfindung oben genanntes Problem zu überwinden.

Die Aufgabe wird gelöst durch ein Verfahren gemäß Anspruch 1 und ein Bauteil gemäß Anspruch 13.

Die Erfindung wird anhand der Figuren näher erläutert.

Weitere vorteilhafte Maßnahmen sind in den Unteransprüchen aufgelistet, die beliebig in vorteilhafter Art und Weise miteinander kombiniert werden können.

Es zeigen:
- Figur 1: eine Bauteiloberfläche mit einem Riss,
- Figur 2: eine Schnittdarstellung der Figur 1 entlang der Linie II-II,
- Figur 3: eine Schnittdarstellung einer Mulde,
- Figur 4: eine Oberfläche eines Bauteils mit einer erfindungsgemäßen Mulde gemäß der Erfindung,
- Figur 5: zeigt das Negativ der ausgearbeiteten Rissoberfläche (Mulde),
- Figur 6: die Verwendung von Stäben bei der weiteren Reparatur des Bauteils,
- Figur 7: eine Schnittdarstellung der Figur 6 entlang der Linie VII-VIII
- Figur 8, 9, 10, 11: weitere Ausführungsbeispiele der Erfindung,
- Figur 12, 13: eine weitere Anordnungsmöglichkeit von Stäben in der Mulde,
- Figur 14: eine Gasturbine,
- Figur 15: perspektivisch eine Turbinenschaufel und
- Figur 16: perspektivisch eine Brennkammer.

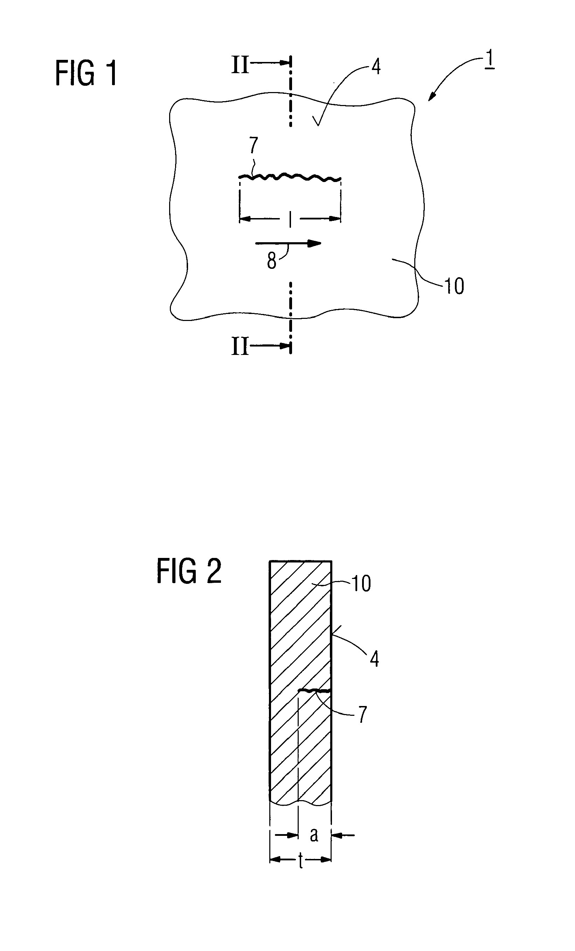

Figur 1 zeigt eine Oberfläche 4 eines Bauteils 1, das ein Riss 7 mit einer Länge 1 längs einer Rissrichtung 8 aufweist. Der Riss 7 kann auch gekrümmt verlaufen, weist aber auch dann eine (gemittelte) Rissrichtung 8 auf.

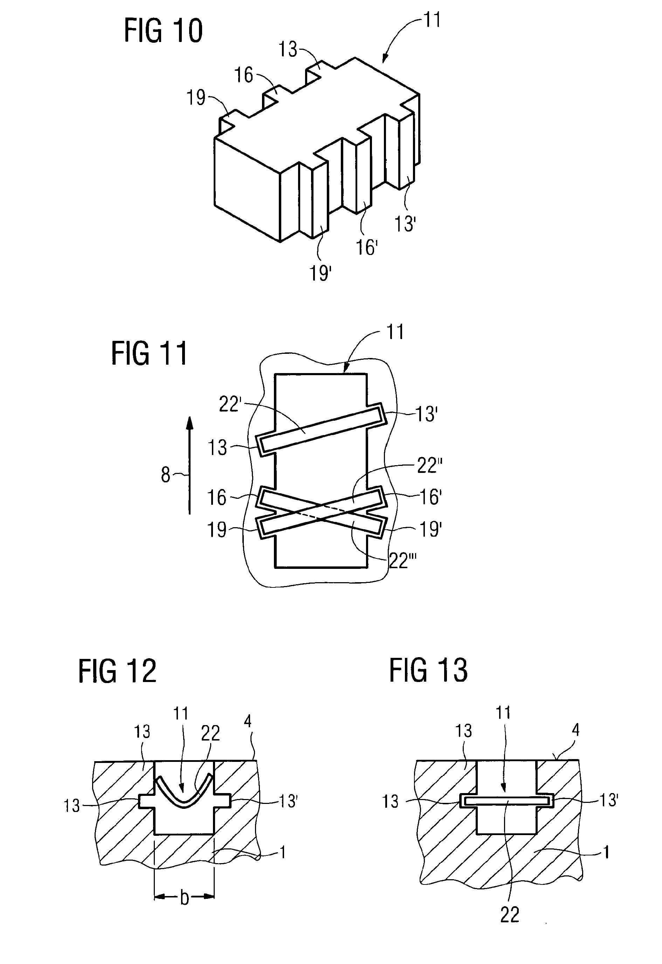

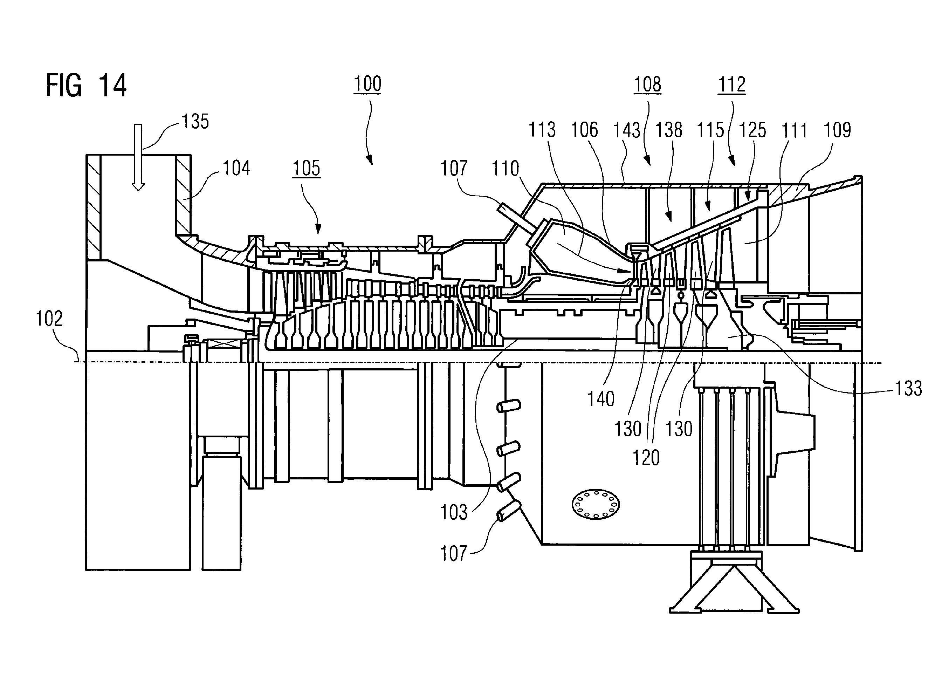

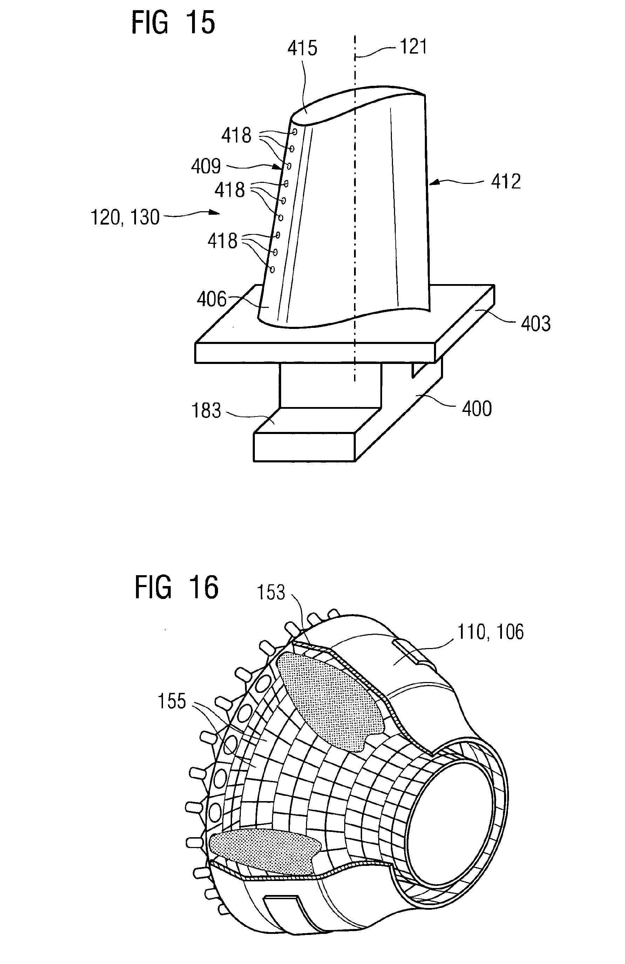

Das Bauteil 1 ist vorzugsweise eine Turbinenschaufel 120, 130 (Fig. 14) oder ein Brennkammerelement 155 (Fig. 15) einer Turbine, wie Z.B. einer Flugzeugturbine, vorzugsweise einer Gasturbine 100 (Fig. 13).
Insbesondere bei Turbinenbauteilen besteht ein Substrat 10 des Bauteils 1 aus einer nickel- oder kobaltbasierten Superlegierung.
Das Verfahren zur Rissreparatur ist jedoch nicht auf solche Bauteile beschränkt, sondern umfasst auch alle Bauteile mit Rissen, Lunkern, Vertiefungen, die mittels Löten oder Schweißen repariert werden und auch solche, die aus anderen Materialien bestehen.
Figur 2 zeigt eine Schnittdarstellung der Figur 1, aus der zu entnehmen ist, dass der Riss 7 eine Risstiefe a in dem Substrat 10 des Bauteils 1, das eine Dicke oder Wanddicke t aufweist, hat (a « t).

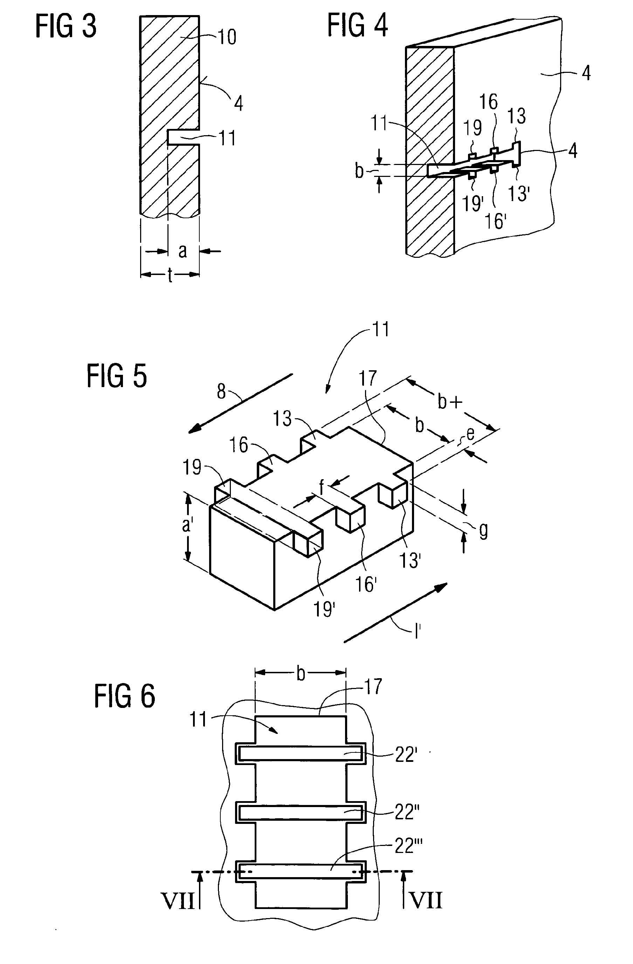

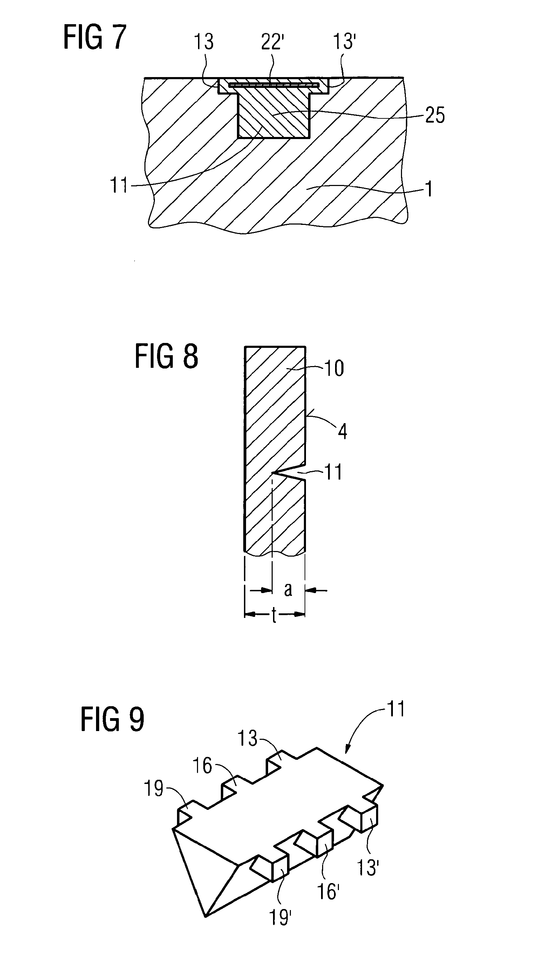

Der Riss 7 gemäß den Figuren 1, 2 wird wie im Stand der Technik ausgearbeitet, so dass eine Mulde 11 entsteht, die nach dem Stand der Technik im Querschnitt eine rechteckförmige (Figur 3, 4, 5) oder dreiecksförmige (Fig. 8, 9) Vertiefung aufweist. Andere Querschnittsformen sind denkbar. Die Mulde 11 ist vorzugsweise quaderförmig ausgebildet.

Erfindungsgemäß weist die Mulde 11 jedoch zusätzlich zumindest zwei Aussparungen 13, 13', 16, 16', 19, 19' auf.
Figur 4 zeigt eine Aufsicht auf eine solche Mulde 11.

Die Aussparungen 13, 13', ... können längs der Richtung 8 um den Umfang der Mulde 11 beliebig angeordnet sein. Vorzugsweise sind die Aussparungen 13, 13', ... paarweise direkt gegenüberliegend angeordnet (Fig. 4, 5, 6, 9, 10).

Vorzugsweise sind die Abstände zwischen den Aussparungen 13, 13', 16, 16', ... und insbesondere auch zu dem Anfang bzw. dem Ende 17 der Mulde 11 äquidistant (Fig. 5, 6).
In dem Ausführungsbeispiel gemäß Figur 4 sind die Aussparungen 13, 13' am Ende 17 der Mulde 11 vorhanden.

In Figur 5 ist das Negativ der herausgearbeiteten inneren Oberfläche der Mulde 11 mit Aussparungen 13, 13', ... dargestellt.

Hier sind die Aussparungen 13, 13' nicht am Ende 17 der Mulde 11 angeordnet, sondern weisen einen Abstand zu einem Ende 17 der Mulde 11 längs der Richtung 8 auf.

Die ausgearbeitete Mulde 11 hat eine Höhe a', die gleich oder im Wesentlichen der Risstiefe a gemäß Figur 3 entspricht (a ≤ a').
Die Mulde 11 weist eine Länge 1' entlang der Rissrichtung 8 auf, die gleich oder im Wesentlichen der Länge 1 des Risses 7 (Figur 1) entspricht (1 ≤ 1').

Weiterhin weist die Mulde 11 (ohne Aussparungen) eine Breite b auf, die breit genug ist, dass der Riss 7 und angegriffene Oberflächen auf der Rissoberfläche entfernt wurden.

Die Aussparungen 13, 16, 19, die vorzugsweise gegenüberliegende, insbesondere senkrecht zur Rissrichtung 8, Aussparungen 13', 16', 19' aufweisen, stellen quasi quer zur Richtung 8 Quader (siehe gestrichelt angedeutet) dar, die eine Länge b+ größer als die Breite b der Mulde 11 aufweisen.

Die Aussparungen 13, 13', ... sind hier beispielsweise quaderförmig (oder auch würfelförmig) ausgebildet und weisen längs der Richtung 8 eine Länge f auf, in Richtung der Tiefe a' eine Tiefe g und zur Richtung der Breite b eine Breite e. Die Breite e der Aussparung ist vorzugsweise deutlich kleiner als die Breite b der Mulde 11, die Länge f ist deutlich kleiner als die Länge l' der Mulde 11 sowie ist die Tiefe g vorzugsweise deutlich kleiner als die Tiefe a' der Mulde 11.

In Figur 5 sind die Aussparungen 13, 13', .... Würfel- oder quaderförmig ausgebildet.
Ebenso können die Aussparungen 13, 13', ... andere Formen aufweisen (im Querschnitt rund oder dreiecksförmig).

Nachdem der Riss gemäß Figur 5 ausgearbeitet wurde, werden in die Aussparungen 13, 13', ... Stäbe 22', 22" , 22"' hineingelegt (Fig. 6), deren Schmelztemperatur höher ist als die Schmelztemperatur des Füllmaterials, das insbesondere ein Lot 25 darstellt, das dann noch in die aufzufüllenden Mulde 11 eingefüllt wird (Fig. 7). Die Mulde 11 kann auch zugeschweißt werden.

Die Aussparungen 13, 13' sind vorzugsweise so ausgeführt, dass man die Stäbe 22', 22", 22"' dort von oben herab hineinlegen kann, d.h. die Aussparungen 13, 13',... sind auf Höhe der Oberfläche 4 offen, und diese ragen nicht über die Oberfläche 4 aus der Mulde 11 hinaus. Die Tiefe g der Aussparungen 13, 13',... ist hier (Fig. 5) vorzugsweise so ausgeführt, dass der Stab 22', 22", 22"' nahe der Oberfläche 4 des Bauteils 1 angeordnet ist.

Die Stäbe 22', 22" sind vorzugsweise in einer Ebene, also auf einer Höhe angeordnet. Die Höhe der Stäbe 22', 22" untereinander, also der Tiefe g der jeweiligen Aussparungen 13, 13' kann auch beliebig gewählt werden, so dass ein größerer Abstand zur Oberfläche 4 vorhanden ist.

Vorzugsweise besteht das Material der Stäbe 22', 22", 22"' aus einem keramischen Material.

Die Wirkung der Stäbe besteht darin, dass ein Riss, der häufig an der Oberfläche 4 sich ausbildet und der sich in dem Lot ausbreitet auf die keramischen Stäbe 22', 22", 22"' trifft und dort aufgrund der höheren Zähigkeit des Materials der Stäbe 22', 22", 22"' darin gehindert wird weiter zu wachsen.

Ebenso können sich die Aussparungen 13, 13', 16, 16', 19, 19' über die gesamte Höhe a' der Mulde 11 erstrecken, wie es in Figur 10 dargestellt ist.
In diese Aussparungen 13, 13', ... werden dann vorzugsweise keine Stäbe, sondern Platten eingeschoben, die sich über die gesamte Breite b+ erstrecken. Die Platten können die Höhe a' aufweisen, können aber auch kleiner ausgebildet sein.

Statt Platten können auch fein- oder grobmaschige Netze eingefügt werden, so dass das Füllmaterial oder das Lot beim Löten das Netz umschließen kann und das Netz über die gesamte Tiefe der Mulde 11 als Risshindernis wirkt.

Anstatt der Stäbe 22', 22", 22"' können auch Faserbündel und anstelle der Platten können Fasermatten in die Mulde 11 eingeschoben werden.

Ebenso kann ein Coupon in die Mulde 11 eingelötet oder geschweißt werden, der eine Form gemäß Figur 5 aufweist und dabei kleinere Maße als die Mulde 11 aufweist, um in diese hinein geschoben werden zu können.

In Figur 11 ist ein weiteres Ausführungsbeispiel für eine Anordnung der Stäbe 22', 22", 22"' in der Mulde 11 gezeigt.

Die Stäbe 22', 22", ... verlaufen hier nicht senkrecht zur Rissrichtung 8 oder zur Längsrichtung der Mulde 11, sondern sind schräg angeordnet. Ebenso können sich die Stäbe 22", 22"' kreuzen, d.h. sie sind entweder in verschiedenen Höhen in der Mulde 11 angeordnet oder in die Aussparungen 16, 16', 19, 19' wird ein Kreuz in Form eines "X" eingelegt, wobei die Stäbe 22'' und 22"' ein Teil bilden können.

Weitere Anordnungsmöglichkeiten bezüglich der Stäbe 22', 22" untereinander oder der Kombination von Stäben und Fasermatten (Figur 10) sind denkbar.

Statt der Aussparung, die an der Oberfläche 4 des Bauteils 1 angrenzen, können auch Aussparungen 13, 13', ... unterhalb der Oberfläche 4 auf den Innenflächen der Mulde 11 vorhanden sein. Die Stäbe 22, ... müssen dann so flexibel sein, dass sie gebogen werden können (Figur 12), damit sie in die Mulde 11 eingeführt werden können und wobei die Stäbe eine Länge > b aufweisen müssen, damit ihre beiden Enden in den Vertiefungen 13, 13' aufliegen (Figur 13).

Die Figur 14 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 15 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der McrAlx kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 16 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 mit dem erfindungsgemäßen Verfahren repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Rissreparatur eines Bauteils (1),
das einen Riss (7) auf einer Oberfläche (4) des Bauteils (1) aufweist,
wobei eine Mulde (11) um den Riss (7) herausgearbeitet und wobei in einem letzten Verfahrensschritt die Mulde (11) befüllt wird,
insbesondere mit einem Lot (25),
**dadurch gekennzeichnet, dass**
die Mulde (11) zumindest zwei Aussparungen (13, 13', 16, 16', 19, 19') aufweist.

2. Verfahren nach Anspruch 1,
**dadurch gekennzeichnet, dass**
die Aussparungen (13, 13', 16, 16', 19, 19') auf der Höhe der Oberfläche (4) angeordnet sind.

3. Verfahren nach Anspruch 1 oder 2,
**dadurch gekennzeichnet, dass**
die Aussparungen (13, 13', ...) um den Umfang der Mulde (11) herum angeordnet sind.

4. Verfahren nach Anspruch 3,
**dadurch gekennzeichnet, dass**
die Aussparungen (13, 13', 16, 16', 19, 19') auf gegenüberliegenden Seiten der Mulde (11) paarweise gegenüberliegen.

5. Verfahren nach Anspruch 1, 2, 3 oder 4,
**dadurch gekennzeichnet, dass**
die Mulde (11) quaderförmig ist.

6. Verfahren nach Anspruch 1, 2, 3, 4 oder 5,
**dadurch gekennzeichnet, dass**
die Mulde (11) eine Längsrichtung parallel zur Rissrichtung (8) des Risses (7) aufweist.

7. Verfahren nach Anspruch 2, 3, 4, 5 oder 6,
**dadurch gekennzeichnet, dass**
die Aussparungen (13, 13', 16, 16', 19, 19') quer, insbesondere senkrecht,
zu einer Rissrichtung (8) des Risses (7) oder einer Längsrichtung der Mulde (11) verlaufen und
dementsprechend die Mulde (11) auf der Höhe der Oberfläche (4) eine größere Breite (b+) als eine Breite (b) der Mulde (11) ohne Aussparung aufweist.

8. Verfahren nach Anspruch 1, 2, 3, 4, 5, 6 oder 7,
**dadurch gekennzeichnet, dass**
die Aussparungen (13, 13', 16, 16') einen Quader bilden.

9. Verfahren nach Anspruch 2 oder 8,
**dadurch gekennzeichnet, dass**
die Aussparungen (13, 13', ...) so ausgebildet sind,
dass durch Einlegen von Stäben (22', 22" , 22"') die Stäbe (22', 22", 22"') in der Nähe der Oberfläche (4) des Bauteils 1 angeordnet sind,
aber nicht über die Oberfläche (4) des Bauteils 1 hinausragen.

10. Verfahren nach Anspruch 1, 2, 3, 4, 5, 6, 7, 8 oder 9,
**dadurch gekennzeichnet,**
**dass** Stäbe (22', 22" , 22"') in die Aussparungen (13, 13', ...) angeordnet werden und
**dass** dann die Mulde (11) mit einem Füllmaterial, insbesondere mit einem Lot (25),
befüllt wird,
wobei die Schmelztemperatur der Stäbe (22', 22", 22"') eine höhere Schmelztemperatur als die des Füllmaterials aufweist.

11. Verfahren nach Anspruch 9 oder 10,
**dadurch gekennzeichnet, dass**
die Stäbe (22', 22", 22"') aus Keramik sind.

12. Verfahren nach Anspruch 2, 3, 4, 5, 6, 7 oder 8,
**dadurch gekennzeichnet, dass**
ein Coupon in die Mulde (11) befestigt,
insbesondere eingelötet wird,
der eine Form der Mulde (11) mit Aussparungen (13, 13', ...) aufweist.

13. Bauteil hergestellt nach einem oder mehreren der vorherigen Ansprüche.
